# EUROPEAN PATENT APPLICATION

(11) **EP 4 841 475 A1**
(43) Date of publication of application: **18.11.2026**
(21) Application number: 25212525.7
(22) Date of filing: 30.10.2025
(51) Int. Cl.: G06F 16/9535

(54) **EFFICIENT PROCESSING OF DATA REQUESTS**

(30) Priority: 16.05.2025 US 202563806814 P
(71) Applicant: GOOGLE LLC, Mountain View CA 94043 (US)
(72) Inventor: KIDERLE, Oliver Albert, 8002 Zürich (CH); MEYERSON, Adam William, 8002 Zürich (CH); CHIEM, Bao Duy, 8002 Zürich (CH); LENNERZ, Julia, 8802 Kilchberg (CH); DE MIQUEL BLEIER, Alejandro, 8002 Zürich (CH); BARDIOVSKY, Vojtech, 150 00 Praha 5-Smíchov (CZ); BORASSI, Michele, 8002 Zürich (CH)
(74) Representative: Marks & Clerk GST

(57) **Abstract**

Methods, systems, and apparatus, including computer programs encoded on a computer storage medium, for efficiently processing data requests. A set of candidate account groups is obtained. A compressed representation of each candidate account group is generated. A data structure that maps the compressed representation of each account group to a corresponding account group identifier is created. A query is received. A query vector representing the query is generated. For a given account in the compressed representation data structure, a semantic distance between the query vector and each candidate account group in the given account is determined. Fewer than all of the candidate account groups are disabled based on the semantic distance determination, resulting in an evaluation set of candidate account groups. A matching account group is selected for the given account. A digital component of the particular account group is distributed using distribution parameters of the matching account group.

## Description

### BACKGROUND

The present disclosure relates to data processing, and in some aspects, efficiently processing data requests.

As Internet usage has grown, so has the number of web pages providing information. Often, content that is presented to users on a web page will include links that redirect users to a specified universal resource locator. However, a static universal resource locator may not adequately address the needs of all users.

### SUMMARY

In general, one innovative aspect of the subject matter described in this specification can be embodied in methods that include the actions of obtaining, by a service system including one or more hardware processors, a set of candidate account groups that each include one or more distribution keywords, one or more web page addresses, and one or more digital components; generating, by the service system, a compressed representation of each candidate account group among the set of candidate account groups, wherein the compressed representation for each individual candidate account group among the set of candidate account groups is a vector representing attributes of the given candidate account group; creating, by the service system and in hardware memory, a compressed representation data structure that maps the compressed representation of each account group to a corresponding account group identifier and an account identifier of an account containing the candidate account group identified by the corresponding account group identifier; after creating the compressed representation data structure: receiving, by the service system, a query submitted by a client device; generating, by the service system, a query vector representing query attributes of the query; determining, by the service system and for a given account in the compressed representation data structure, a semantic distance between the query vector and each candidate account group among a plurality of candidate account groups in the given account; disabling, by the service system and for the given account, fewer than all of the candidate account groups based on the semantic distance determination, resulting in an evaluation set of candidate account groups; selecting, by the system and as a matching account group for the given account, a particular candidate account group from the evaluation set of candidate account groups; and distributing a digital component of the particular account group using distribution parameters of the particular account group based on the selection of the particular account group as the matching account group. Other embodiments of this aspect include corresponding systems, apparatus, and computer programs, configured to perform the actions of the methods, encoded on computer storage devices. Other embodiments of this aspect include corresponding systems, apparatus, and computer programs, configured to perform the actions of the methods, encoded on computer storage devices.

These and other embodiments can each optionally include one or more of the following features. Selecting the particular candidate account group can include obtaining distribution parameters for the evaluation set of candidate account groups; ranking the candidate account groups in the evaluation set of candidate account groups based on the distribution parameters; and selecting the particular candidate account group as the matching account group for the given account.

Methods can include after selecting the particular candidate account group ranking the matching account group for the given account relative to other account groups for other accounts.

Obtaining the set of candidate account groups can include obtaining the particular candidate account group, the method further comprising extracting content elements from a given web page located at a given web page address among the one or more web page addresses of the particular candidate account group.

Generating the compressed representation can include generating a particular compressed representation of the particular candidate account group based on the content elements extracted from the given web page.

Methods can include extracting features of digital components included in the particular candidate account group. Generating the particular compressed representation of the particular candidate account group can include generating the particular compressed representation based on the content elements extracted from the given web page and the features extracted from the digital components included in the particular candidate account group.

Methods can include, after receiving the query submitted by the client device, computing a similarity measure between the compressed representation of the particular account group and the query vector representing query attributes of the query. Determining the sematic distance can be based on at least the similarity measure between the compressed representation of the particular account group and the query vector representing query attributes of the query.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which data requests are processed.
FIG. 2 is a block diagram illustrating a system for implementing efficient processing of data requests.
FIG. 3 is a flow chart of an example process for efficient processing of data requests.
FIG. 4 is a block diagram of an example computer system.

Like reference numbers and designations in the various drawings indicate like elements.

### DETAILED DESCRIPTION

This specification is related to a system designed to efficiently process data requests. As discussed in detail throughout this document, the system discussed herein provide technical improvements over conventional systems, for example, by reducing the amount of processing required to respond to a data request (e.g., a query submitted by a client device), while also expanding the number of content distribution accounts evaluated before responding to the data request. In other words, the present system provides for broader coverage of potential sources of content to provide in response to a data request, while also reducing the amount of data required to be processed when responding to the data request.

The present system also provides improved content retrieval capabilities than conventional systems, for example, by reducing the system's reliance on distribution keywords that control distribution of content and focusing on a more granular and holistic representation of content distributed by an account or account group. For example, rather than matching a received query to a single keyword to trigger distribution of content responsive to the query, as done by conventional systems, the present system creates a compressed representation of the account or account group using multiple signal sources and uses these compressed representations to select which account or account group will be used to distribute content responsive to the query. This enables the system to choose the content distributed in response to the query in a more granular manner (e.g., with more specificity) than conventional keyword matching technique employed by conventional systems.

Many of the processes discussed herein require the creation of feature vectors (e.g., encodings or embeddings) that are computationally intensive. As such, many of these operations cannot be performed in real time, such as during the time between receipt of a search query and the time at which a response must be sent, while also meeting latency constraints for responding to a data request. Furthermore, in the context of Internet search queries, the large numbers of search queries received by search systems are in the tens of thousands per second, with the total number of searches occurring per day in the billions, making it difficult to perform many of the operations discussed herein within the time constraints required to respond to a search query and/or with available compute capacity.

Furthermore, the content of the search query should be known to effectively carry out the process of selecting content to deliver in response to the search query, such that processing of the search query and response candidates will be performed in the time period spanning from query receipt to the end of a latency constraint (e.g., a value specifying how quickly content responsive to the search query must be transmitted). These latency constraints are often set in the range of 100-200ms, which hinders the use of many resource intensive processing techniques.

To address the issues discussed above, the present system uses processing strategies and database structures that enable similarity measures to be performed in an efficient fashion during the time between receipt of the search query and the time at which a response to the search query must be sent (e.g., within a second, and usually in the range of 100ms). As discussed in more detail below, the system identifies the account groups associated with a given account (e.g., for a given content distributor), accesses the landing pages (e.g., web pages) located at URLs included in the account group, and extracts content elements from the landing pages. The system can also evaluate the content of digital components that are included in the account group, and extract features of the digital components. To the extent that the account group includes distribution keywords, the system can also obtain these distribution keywords.

Using the content elements, digital component features, and optionally distribution keywords from an account group, the system generates a compressed representation of the account group and stores this compressed representation in a database keyed to an account identifier of the account and/or an account group identifier of the account. When a data request (e.g., a search query) is received, the system can use the data request and potentially other data received with the data request to generate a query vector and determine a subset of accounts and account groups having compressed representations matched by the query vector (and therefore, the query).

For example, a dot product (or another appropriate similarity measure) can be computed between the stored compressed representations of candidate account groups and the query vector for the received data request. Computing a dot product using the stored compressed representations is orders of magnitude faster than having to generate the compressed representations and then generate a similarity measure. As such, the similarity measures between the search query and candidate account groups can be generated in a fraction of the time it would take to perform all the operations after receipt of the data request. Furthermore, the analysis is more complete than existing techniques, without negatively affecting latency, because a larger corpus of candidates can be considered, thereby resulting in a more exhaustive analysis than would otherwise be possible. In contrast, existing techniques can only manage a similar corpus at the cost of additional latency and using additional computation resources.

Once the similarity measures are determined, a set of the candidate account groups can be dropped from consideration using the similarity measures, which is more efficient than continuing to consider all candidate account groups during further processing required to select a final account group to service (e.g., respond to) the data request. For example, some of the additional operations performed to select a final account group to use for content distribution are resource intensive because they use machine learning models to predict outcomes (e.g., predicted interaction likelihood/rate) associated with distributing content using each of the remaining candidate account groups after dropping a set of candidates. As such, by dropping the set of candidate account groups based on the similarity measures, the system can reduce the amount of subsequent resource intensive operations that are required, while also ensuring that the quality of the system output is not negatively affected.

For example, the set of candidate account groups that are dropped can be those account groups that are less similar to the query vector than the other set of candidate account groups that are retained for further processing. Since the similarity has been considered at this point, all of the candidate account groups retained for further processing are more similar to the query vector than those that were dropped. In this way, the relevance of the account group selected is ensured, while reducing the processing that is required to complete the account group selection process. Once an account group is selected, the selected account group can be used to distribute content responsive to the search query.

The description that follows will refer to operations performed on an account group level. However, the operations can be performed at the account level, or on other delineations of an account. As such, the phrase "account group" can generally be replaced with the term "account" throughout the specification.

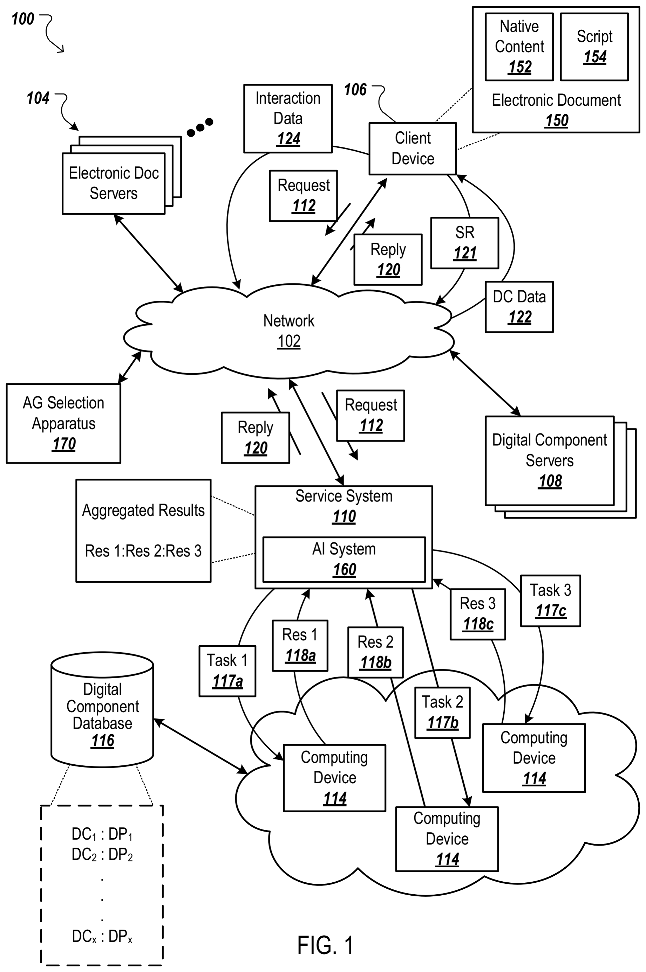

FIG. 1 is a block diagram of an example environment 100 in which data requests are processed. The example environment 100 includes a network 102, such as a local area network (LAN), a wide area network (WAN), the Internet, or a combination thereof. The network 102 connects electronic document servers 104, client devices 106, digital component servers 108, and a service system 110. The example environment 100 may include many different electronic document servers 104, client devices 106, and digital component servers 108.

A client device 106 is an electronic device that is capable of requesting and receiving online resources over the network 102. Example client devices 106 include personal computers, gaming devices, mobile communication devices, digital assistant devices, augmented reality devices, virtual reality devices, and other devices that can send and receive data over the network 102. A client device 106 typically includes a user application, such as a web browser, to facilitate the sending and receiving of data over the network 102, but native applications (other than browsers) executed by the client device 106 can also facilitate the sending and receiving of data over the network 102.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

As illustrated, the client device 106 is presenting an electronic document 150. An electronic document is data that presents a set of content at a client device 106. Examples of electronic documents include webpages, word processing documents, portable document format (PDF) documents, images, videos, search results pages, and feed sources. Native applications (e.g., "apps" and/or gaming applications), such as applications installed on mobile, tablet, or desktop computing devices are also examples of electronic documents. Electronic documents can be provided to client devices 106 by electronic document servers 104 ("Electronic Doc Servers").

For example, the electronic document servers 104 can include servers that host publisher websites. In this example, the client device 106 can initiate a request for a given publisher webpage, and the electronic server 104 that hosts the given publisher webpage can respond to the request by sending machine executable instructions that initiate presentation of the given webpage at the client device 106.

In another example, the electronic document servers 104 can include app servers from which client devices 106 can download apps. In this example, the client device 106 can download files required to install an app at the client device 106, and then execute the downloaded app locally. Alternatively, or additionally, the client device 106 can initiate a request to execute the app, which is transmitted to a cloud server. In response to receiving the request, the cloud server can execute the application and stream a user interface of the application to the client device 106 so that the client device 106 does not have to execute the app itself. Rather, the client device 106 can present the user interface generated by the cloud server's execution of the app and communicate any user interactions with the user interface back to the cloud server for processing.

Electronic documents can include a variety of content. For example, an electronic document 150 can include native content 152 that is within the electronic document 150 itself and/or does not change over time. Electronic documents can also include dynamic content that may change over time or on a per-request basis. For example, a publisher of a given electronic document (e.g., electronic document 150) can maintain a data source that is used to populate portions of the electronic document. In this example, the given electronic document can include a script, such as the script 154, that causes the client device 106 to request content (e.g., digital component) from the data source when the given electronic document is processed (e.g., rendered or executed) by a client device 106 (or a cloud server). The client device 106 (or cloud server) integrates the content (e.g., digital component) obtained from the data source into the given electronic document to create a composite electronic document including the content obtained from the data source.

In some situations, a given electronic document (e.g., electronic document 150) can include a digital component script (e.g., script 154) that references the service system 110, or a particular service provided by the service system 110. In these situations, the digital component script is executed by the client device 106 when the given electronic document is processed by the client device 106. Execution of the digital component script configures the client device 106 to generate a request for digital components 112 (referred to as a "component request"), which is transmitted over the network 102 to the service system 110. For example, the digital component script can enable the client device 106 to generate a packetized data request including a header and payload data. The component request 112 can include event data specifying features such as a name (or network location) of a server from which the digital component is being requested, a device identifier corresponding the client device 106, such as a name (or network location, such as an Internet Protocol address) of the requesting device (e.g., the client device 106), a cookie of the service system 110 that was previously placed on the computing device by the service system 110, and/or information that the service system 110 can use to select one or more digital components, or other content, provided in response to the request. In some implementations, the cookie that is included in the component request 112 can be a cookie corresponding to an account of a user that is logged into the service system 110, which is referred to as a service cookie. The component request 112 is transmitted, by the client device 106, over the network 102 (e.g., a telecommunications network) to a server of the service system 110.

The component request 112 can include event data specifying other event features, such as the electronic document being requested and characteristics of locations of the electronic document at which digital component can be presented. For example, event data specifying a reference (e.g., URL) to an electronic document (e.g., webpage) in which the digital component will be presented, available locations of the electronic documents that are available to present digital components, sizes of the available locations, and/or media types that are eligible for presentation in the locations can be provided to the service system 110. Similarly, event data specifying keywords associated with the electronic document ("document keywords") or entities (e.g., people, places, or things) that are referenced by the electronic document can also be included in the component request 112 (e.g., as payload data) and provided to the service system 110 to facilitate identification of digital components that are eligible for presentation with the electronic document. The event data can also include a search query that was submitted from the client device 106 to obtain a search results page.

Component requests 112 can also include event data related to other information, such as information that a user of the client device has provided, geographic information indicating a state or region from which the component request was submitted, or other information that provides context for the environment in which the digital component will be displayed (e.g., a time of day of the component request, a day of the week of the component request, a type of device at which the digital component will be displayed, such as a mobile device or tablet device). Component requests 112 can be transmitted, for example, over a packetized network, and the component requests 112 themselves can be formatted as packetized data having a header and payload data. The header can specify a destination of the packet and the payload data can include any of the information discussed above.

The service system 110 chooses digital components (e.g., third-party content, such as video files, audio files, images, text, and combinations thereof, which can all take the form of advertising content or non-advertising content) that will be presented with the given electronic document (e.g., at a location specified by the script 154) in response to receiving the component request 112 and/or using information included in the component request 112. In some implementations the selection of a digital component includes the selection of an account group that will be used to respond to the request 112, and the selection of the account group can be performed in a similar manner described herein with reference to the selection of a digital component.

In some implementations, a digital component is selected in less than a second (e.g., in less than 100-200ms) to avoid errors that could be caused by delayed selection of the digital component. For example, delays in providing digital components in response to a component request 112 can result in page load errors at the client device 106 or cause portions of the electronic document to remain unpopulated even after other portions of the electronic document are presented at the client device 106.

Also, as the delay in providing the digital component to the client device 106 increases, it is more likely that the electronic document will no longer be presented at the client device 106 when the digital component is delivered to the client device 106, thereby negatively impacting a user's experience with the electronic document. Further, delays in providing the digital component can result in a failed delivery of the digital component, for example, if the electronic document is no longer presented at the client device 106 when the digital component is provided.

In some implementations, the service system 110 is implemented in a distributed computing system that includes, for example, a server and a set of multiple computing devices 114 that are interconnected and identify and distribute digital component in response to requests 112. The set of multiple computing devices 114 operate together to identify a set of digital components that are eligible to be presented in the electronic document from among a corpus of millions of available digital components (DC1-x). The millions of available digital components can be indexed, for example, in a digital component database 116. Each digital component index entry can reference the corresponding digital component and/or include distribution parameters (DP1-DPx) that contribute to (e.g., trigger, condition, or limit) the distribution/transmission of the corresponding digital component. For example, the distribution parameters can contribute to (e.g., trigger) the transmission of a digital component by requiring that a component request include at least one criterion that matches (e.g., either exactly or with some pre-specified level of similarity) one of the distribution parameters of the digital component.

In some implementations, the distribution parameters for a particular digital component are part of an account group and can include distribution keywords that must be matched (e.g., by electronic documents, document keywords, or terms specified in the component request 112) in order for the digital component to be eligible for presentation. Additionally, or alternatively, the distribution parameters can include embeddings that can use various different dimensions of data, such as website details and/or consumption details (e.g., page viewport, user scrolling speed, or other information about the consumption of data). The distribution parameters can also require that the component request 112 include information specifying a particular geographic region (e.g., country or state) and/or information specifying that the component request 112 originated at a particular type of client device (e.g., mobile device or tablet device) in order for the digital component to be eligible for presentation. The distribution parameters can also specify an eligibility value (e.g., ranking score, selection value, or some other specified value) that is used for evaluating the eligibility of the digital component for distribution/transmission (e.g., among other available digital components).

The identification of the eligible digital component can be segmented into multiple tasks 117a-117c that are then assigned among computing devices within the set of multiple computing devices 114. For example, different computing devices in the set 114 can each analyze a different portion of the digital component database 116 to identify various digital components having distribution parameters that match information included in the component request 112. In some implementations, each given computing device in the set 114 can analyze a different data dimension (or set of dimensions) and pass (e.g., transmit) results (Res 1-Res 3) 118a-118c of the analysis back to the service system 110. For example, the results 118a-118c provided by each of the computing devices in the set 114 may identify a subset of digital components that are eligible for distribution in response to the component request and/or a subset of the digital component that have certain distribution parameters. The identification of the subset of digital components can include, for example, comparing the event data to the distribution parameters, and identifying the subset of digital components having distribution parameters that match at least some features of the event data.

The service system 110 aggregates the results 118a-118c received from the set of multiple computing devices 114 and uses information associated with the aggregated results to select one or more digital components that will be provided in response to the request 112. For example, the service system 110 can select a set of winning digital components (one or more digital components) based on the outcome of one or more content evaluation processes. In turn, the service system 110 can generate and transmit, over the network 102, reply data 120 (e.g., digital data representing a reply) that enable the client device 106 to integrate the set of winning digital components into the given electronic document, such that the set of winning digital components (e.g., winning third-party content) and the content of the electronic document are presented together at a display of the client device 106.

In some implementations, the client device 106 executes instructions included in the reply data 120, which configures and enables the client device 106 to obtain the set of winning digital components from one or more digital component servers 108. For example, the instructions in the reply data 120 can include a network location (e.g., a Uniform Resource Locator (URL)) and a script that causes the client device 106 to transmit a server request (SR) 121 to the digital component server 108 to obtain a given winning digital component from the digital component server 108. In response to the request, the digital component server 108 will identify the given winning digital component specified in the server request 121 (e.g., within a database storing multiple digital components) and transmit, to the client device 106, digital component data (DC Data) 122 that presents the given winning digital component in the electronic document at the client device 106.

When the client device 106 receives the digital component data 122, the client device will render the digital component (e.g., third-party content), and present the digital component at a location specified by, or assigned to, the script 154. For example, the script 154 can create a walled garden environment, such as a frame, that is presented within, e.g., besides the native content 152 of the electronic document 150. In some implementations, the digital component is overlayed over (or adjacent to) a portion of the native content 152 of the electronic document 150, and the service system 110 can specify the presentation location within the electronic document 150 in the reply 120.

Digital components that are available for selection and distribution for a given content provider can be included together in an account of the content distributor, and groups of the different digital components can be grouped together in different account groups (e.g., sections or delineations) of the account. Each account group includes one or more digital components and other distribution parameters that control whether the one or more digital components are eligible to be served in response to a received search query, or another data request. For example, a given account group can specify a first set of distribution parameters that control distribution of the digital components in that account group, while a different account group can specify a different set of distribution parameters that control distribution of the digital components in the different account group. The account groups can also include other distribution parameters that can be used to select which digital component from a given account group is distributed in response to receipt of a search query.

Some account groups can include one or more distribution keywords, while other account groups may be keywordless, and not include any distribution keywords. In some situations, the selection of an account group can be based on a signal, or a combination of signals, rather than being based directly on distribution keywords themselves. For example, as discussed in more detail below, the selection of an account group can be based on one or more of digital components included in the account group and/or landing pages of the account group.

The digital components that are available for selection and presentation at user devices include links to URLs (e.g., of landing pages), and interaction with the digital components will redirect the client device 106 to the URLs. In some situations, an account group can include a set of URLs (e.g., one URL or multiple URLs) that can be used for some or all of the digital components in the account group. For example, a specific URL from the set of URLs can be selected on a per-query basis and inserted into, or otherwise added to in the form of a link, the digital component selected for distribution in response to a query. In some situations, the URLs specified for one account group may differ from the URLs specified for a different account group.

As discussed in more detail below, the service apparatus 110 can be configured to efficiently process requests 112, such as digital component requests, search queries, or other data requests, that are received from client devices 106. For example, the service apparatus 110 can generate compressed representations of account groups in an offline manner, such as prior to receipt of a particular search query, and then use a query vector in an online manner (e.g., after receipt of the particular search query) to determine which proper subset (e.g., less than all) of the account groups known to the service apparatus 110 is eligible to service the search query (e.g., provide content responsive to the search query). More specifically, the service apparatus 110 can compute a similarity measure between the query vector of the query and the compressed representation and rank the account groups based on their respective levels of similarity. The account groups that are within a certain semantic distance (e.g., level of similarity) to the query vector can be retained for further processing (e.g., selection processing), while those that are not within the certain sematic distance can be discarded from further processing. The retained account groups can be processed in a manner similar to that discussed above to determine a "winning" (e.g., highest ranked) account group, which is then used to distribute a digital component that is responsive to the request 112.

In some implementations, the service apparatus 110 can include, or be in communication with, an artificial intelligence (AI) system 160 and/or an account group (AG) selection apparatus 170. Each of the AI system 160 and the AG selection apparatus 170 can perform one or more of the operations discussed as part of the efficient processing of data requests. For example, the AI system 160 can be used to support the generation of compressed representations of account groups and/or query vectors, while the AG selection apparatus 170 can be used to determine similarity measures, discard/retain sets of account groups based on the similarity measures, and/or perform additional account group selection operations similar to those discussed above. The AI system 160 is shown as an integrated part of the service system 110 but could be implemented in a system that is physically separate from the service system 110, but capable of being utilized by the service system 110. Meanwhile, the AG selection apparatus 170 is shown as physically separate from the service apparatus 110 but could be integrated as part of the service system 110.

In some implementations, the AI system 160 can be a large language model ("LLM"), which is also referred to simply as a language model, is a model trained to generate and understand human language. LLMs are trained on massive datasets of text and code, and they can be used for a variety of tasks. For example, LLMs can be trained to translate text from one language to another; summarize text, such as web site content, search results, news articles, or research papers; answer questions about text, such as "What is the capital of Georgia?"; create chatbots that can have conversations with humans; and generate creative text, such as poems, stories, recommendations, code; and generate compressed representations (e.g., contextual embeddings) of text input by leveraging, for example, transformer architectures.

The category of "large language models" can vary in size. Larger models generally use a larger number of parameters than smaller models, which enables the larger models to complete a wider range of tasks and generate more accurate responses to input. For example, because of the larger number of parameters, the larger language models are generally configured to understand the context of the input more effectively, and to generate more detailed outputs than smaller models that use a smaller number of parameters.

In some situations, the AI system 160 can be referred to as an auto-regressive neural network when the neural network used to implement the AI system 160 auto-regressively generates an output sequence of tokens. More specifically, the auto-regressively generated output is created by generating each particular token in the output sequence conditioned on a current input sequence that includes any tokens that precede the particular text token in the output sequence, i.e., the tokens that have already been generated for any previous positions in the output sequence that precede the particular position of the particular token, and a context input that provides context for the output sequence.

For example, the current input sequence when generating a token at any given position in the output sequence can include the input sequence and the tokens at any preceding positions that precede the given position in the output sequence. As a particular example, the current input sequence can include the input sequence followed by the tokens at any preceding positions that precede the given position in the output sequence. Optionally, the input and the current output sequence can be separated by one or more predetermined tokens within the current input sequence.

More specifically, to generate a particular token at a particular position within an output sequence, the neural network of the AI system 160 can process the current input sequence to generate a score distribution (e.g., a probability distribution) that assigns a respective score, e.g., a respective probability, to each token in the vocabulary of tokens. The neural network of the AI system 160 can then select, as the particular token, a token from the vocabulary using the score distribution. For example, the neural network of the AI system 160 can greedily select the highest-scoring token or can sample, e.g., using nucleus sampling or another sampling technique, a token from the distribution.

As a particular example, the AI system 160 can be an auto-regressive Transformer-based neural network that includes (i) a plurality of attention blocks that each apply a self-attention operation and (ii) an output subnetwork that processes an output of the last attention block to generate the score distribution.

The AI system 160 can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A.Wu, E. Elsen, S. M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like opendomain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. arXiv preprint arXiv:2005.14165, 2020.

Generally, however, the Transformer-based neural network includes a sequence of attention blocks, and, during the processing of a given input sequence, each attention block in the sequence receives a respective input hidden state for each input token in the given input sequence. The attention block then updates each of the hidden states at least in part by applying self-attention to generate a respective output hidden state for each of the input tokens. The input hidden states for the first attention block are embeddings of the input tokens in the input sequence and the input hidden states for each subsequent attention block are the output hidden states generated by the preceding attention block.

In this example, the output subnetwork processes the output hidden state generated by the last attention block in the sequence for the last input token in the input sequence to generate the score distribution.

Generally, because the language model of the AI system 160 is auto-regressive, the service apparatus 110 can use the same language model to generate multiple different candidate output sequences in response to the same request, e.g., by using beam search decoding from score distributions generated by the language model, using a Sample-and-Rank decoding strategy, by using different random seeds for the pseudo-random number generator that's used in sampling for different runs through the language model or using another decoding strategy that leverages the auto-regressive nature of the language model.

In some implementations, the AI system 160 includes a language model that is pre-trained, i.e., trained on a language modeling task that does not require providing evidence in response to user questions, and the service apparatus 110 (e.g., using AI system 160) causes the AI system 160 to generate output sequences according to the pre-determined syntax through natural language prompts in the input sequence. The final layer of the AI system 160 can produce a vector for each token or a pooled representation of the entire input. For example, the initial input to the AI system 160 can be a set of account group parameters and the output of the final layer can be a vector that is a compressed representation of the full set of account group parameters, or a subset of the account group parameters.

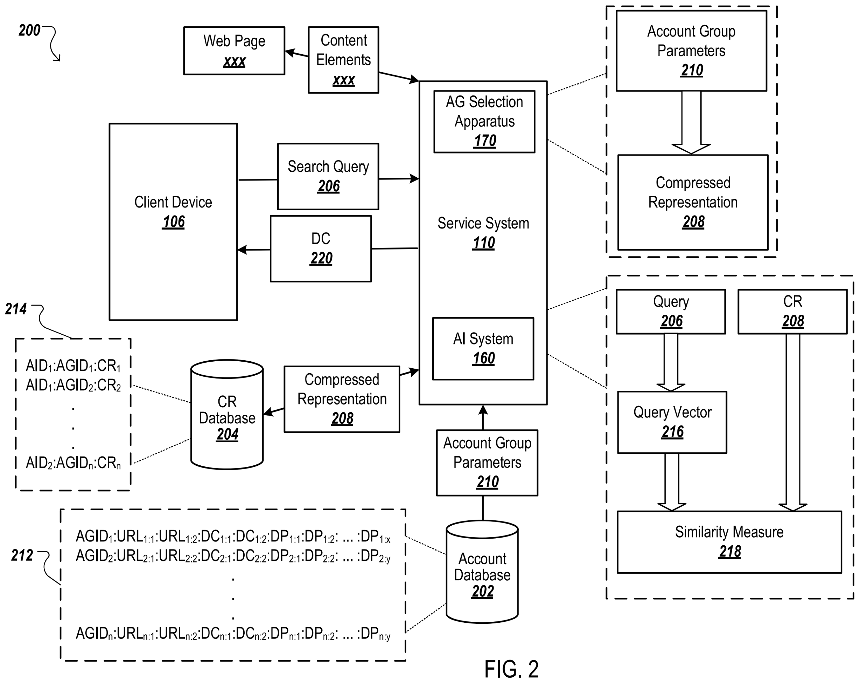

FIG. 2 is a block diagram illustrating a system 200 for implementing efficient processing of data requests. The system 200 includes the service system 110 (shown as including both the AI system 160 and AG selection apparatus 170), the client device 106, an account database 202, and a compressed representation database 204.

Prior to receiving a search query 206 from the client device 106, the service system 110 can perform various operations to ensure that latency constraints of responding to the search query 206 can be met while still providing the benefits of expanding the number of content distribution accounts evaluated using the search query 206 and before responding to the search query 206. For example, the service system 110 can generate compressed representations 208 of account groups, from among a set of candidate account groups, and use the compressed representations 208 after the search query 206 is received to determine which candidate account groups are eligible to be used to distribute a digital component in response to an account (e.g., a content distribution account), and then only perform subsequent account group selection processing on the eligible candidate account groups.

The service system 110 can obtain a set of account group parameters 210 for a set of candidate account groups that are available, for example, in the account database 202. As shown, the account database 202 includes a data structure 212 that stores the account group parameters 210 in data records. The data record corresponding to a given candidate account group can include, for example, an account group identifier (e.g., AGID₁) and the set of account group parameters 210 for that the candidate account group corresponding to the account group identifier. In some implementations, the set of account group parameters 210 for each candidate account group can include one or more distribution keywords, one or more web page addresses, and/or one or more digital components.

The account group parameters 210 for a given candidate account group (and each different account group) can be stored with a reference to an account group identifier corresponding to the candidate account group and/or an account identifier of an account in which the given candidate account group is included. As such, the service system 110 can query the account database 202 using the account group identifier to retrieve the account group parameters 210 of the given candidate account group. Alternatively, the service system 110 can iterate through the data records in a sequential fashion to process each data record in the data structure 212.

The service system 110 can use the account group parameters 210 to generate a compressed representation 208 of the candidate account group corresponding to the account group parameters 210. For example, the account group parameters 210 can be input to the AI system 160, which can generate the compressed representation 208 using the account group parameters 210. In some implementations, the compressed representation 208 can be an embedding or contextual embedding of the account group parameters 210. For example, the AI system 160 can transform the account group parameters 210 into a lower-dimensional representation of the account group parameters 210 while preserving semantic and contextual information related to the account group parameters 210. For example, the compressed representation 208 can be generated in a manner similar to that discussed above with reference to FIG. 1.

The service system 110 can generate a different compressed representation 208 for each candidate account group contained in the account database 202, or a subset of the candidate account groups. The compressed representation of each candidate account group can be a vector representing attributes of the candidate account group for which the compressed representation was generated. For example, the compressed representation CR₁ of FIG. 2 can be generated for account group identifier AGID₁ and stored in the compressed representation (CR) database 204 with a reference to AGID₁. In this example, the compressed representation CR₁ can be generated based on the account group parameters 210 that are stored in the data structure 212 with a reference to the account group identifier AGID₁. More specifically, the record for AGID₁ includes the account group parameters URL_{1:1}, URL_{1:2}, DC_{1:1}, DC_{1:2}, DP_{1:1}, DP_{1:2}, ... DP_{1:x}. In this example, URL_{1:1} and URL_{1:2} are parameters representing the attributes of two different URLs (as well as content located at the URLs) that are assigned to (included in) the candidate account group having the account group identifier AGID₁, DC_{1:1} and DC_{1:2} are parameters representing attributes of two different digital components that are assigned to (included in) the candidate account group having the account group identifier AGID₁. DP_{1:1}, DP_{1:2}, ... DP_{1:x} are parameters representing attributes of X distribution parameters (e.g., keywords, etc.) that are assigned to (included in) the candidate account group having the account group identifier AGID₁. In operation, these account group parameters 210 can be input to the service system 110 (e.g., AI system 160), and the resulting vector output can be the compressed representation 208 that is stored in the CR database 204.

The service system 110 can collect account group parameters that are not specified by an administrator of the account. For example, for each of the URLs that are specified in a candidate account group, the service system 110 can create a landing page feature vector (LPFV) that represents the content of the landing page located at the URL. The feature vector is a numerical representation of a landing page's (i.e., web page's) content, capturing its characteristics in a format that machine learning models, or other applications, can process. It transforms complex, unstructured data (e.g., text, images, metadata) into a structured array of numbers, where each number (or dimension) represents a specific feature or attribute of the page. These features are derived from the page's content, structure, and metadata, enabling quantitative analysis for tasks like ranking, classification, or similarity comparison.

The service system 110 creates the feature vectors by crawling the landing page of a given URL and extracting content elements, such as the text and metadata available at the URL. The service system 110 tokenizes the text into n-grams and creates key-value pairs of structured data representing the content of the landing page. Using these key-value pairs, the service system 110 can capture the overall semantic meaning of the landing page based on various evaluations, such as term frequency analysis, inverse document frequency analysis, the presence of certain keywords in the document, topics inferred from the text, and metadata associated with the landing page. These features can optionally be encoded in a numerical vector representing the web page, which can be stored in the account database 202 (or another database) with a mapping to the URL. As such, these features can be included in the account group parameters 210 with which the compressed representation 208 is generated.

Each candidate account group can include one or more digital components and one or more distribution keywords that control whether the one or more digital components are eligible to be served in response to a received search query. The digital components can be processed by the service apparatus 110 in a manner similar to that discussed above with reference to the web pages at the listed URLs, and the resulting parameters, can be stored in the database 202 and included in the account group parameters 210 used to create the compressed representation 208. The candidate account groups can also include other distribution parameters, such as those discussed above with reference to FIG. 1, which can also be stored in the database 202 and included in the account group parameters 210 used to create the compressed representation 208.

Each of the different compressed representations 208 can be stored in the compressed representation (CR) database 204. For example, a compressed representation data structure 214 can include records that logically map, associate, link, or index each compressed representation 208 to their corresponding account group identifiers (e.g., the account group identifier corresponding to the account group parameters 210 used to generate the compressed representation 208). In some implementations, a record that logically associates, links, or indexes a compressed representation 208 with its corresponding account group identifier can also include the account identifier of an account that includes the candidate account group corresponding to the account group identifier. In this way, the relationships between candidate account groups within the same account can be determined.

After the creation of the compressed representation data structure 214, the service system 110 can receive a query submitted by the client device 106. The service system 110 can use the query 206 to generate a query vector 216 representing query attributes of the query 206. The query vector 216 can be generated, for example, using the AI system 160 or another embedding model (e.g., a smaller model than that used to generate the compressed representations of the candidate account groups). For example, because the query 206 and its related context are generally much smaller amounts of data than the amount of data included in the set of account parameters 210, the generation of the query vector 216 is generally able to be completed without meaningfully affecting the ability of the service apparatus 110 to respond to the query 206 within the latency constraint.

The service system 110 (e.g., by way of the account group (AG) selection apparatus 170) determines a semantic distance between the query vector 216 and each candidate account group in a given account. For example, using the account identifier AID₁, the service apparatus 110 can identify each record corresponding to the account identifier AID₁ (e.g., by searching the data structure 214 of the CR database 204), and compute a similarity measure 218 between the compressed representation 208 of each candidate account group and the query vector 216 representing query attributes of the query 206. In some implementations, the similarity measure can be computed by way of a dot product, cosine similarity, or Euclidean Distance. The value resulting from the computation of the similarity measure can be used to determine the semantic distance of each candidate account group and the query vector 216.

In some implementations, the service system 110 (e.g., by way of the AG selection apparatus 170) can use the semantic distances of the candidate account groups within the same account to determine a subset (e.g., fewer than all) of the candidate account groups that will continue to be processed with respect to servicing the query 206 (e.g., responding to the query 206). For example, the AG selection apparatus 170 can determine a particular candidate account group (e.g., AGID₂) having the closest semantic distance to the query (e.g., based on the similarity measures), and classify the semantically closest candidate account group as the "best" candidate account group based one the analysis already performed. However, since there is additional processing to complete before selecting a particular candidate account group to service the query 206, it is possible that the semantically closest candidate account group will not ultimately be the best overall candidate account group within the account. For example, other candidate account groups may be just slightly semantically different relative to the semantically closest candidate account group, but other selection criteria that have not yet been considered may differ meaningfully (e.g., eligibility values, etc.). As such, the AG selection apparatus 170 identifies additional candidate account groups from the same account to process further.

In some implementations, the AG selection apparatus 170 can use a threshold semantic distance from the particular candidate account group as the cutoff/threshold at which the subset of candidate account groups will be selected for further processing. For example, the AG selection apparatus 170 can use the already computed similarity measures, or newly computed similarity measures (e.g., between the particular candidate account group and the other candidate account groups in the same account) to determine which candidate account groups are within the cutoff/threshold distance of the particular candidate account group and/or query vector. Those candidate account groups that are outside/beyond the cutoff/threshold distance will be disabled from further processing. The disabling of a subset of the candidate account groups in the same account results in an evaluation set of candidate group accounts that will be processed further to select a particular candidate account group as a matching account group for the query 206.

As previously discussed, the disabling of a portion of the candidate account groups from a same account (and across accounts) reduces the amount of processing needed to complete the account group selection process because fewer account groups are full evaluated. This differs from conventional systems in which the full set of account groups from each account are fully evaluated, and then the selection decision is made. Here, the initial processing (e.g., similarity measures) is much less resource intensive, for example, because fewer models are required to be run before the decision to disabling (e.g., removing from consideration) a subset of the candidate account groups, and the additional models are only run during the selection processing that is performed after disabling a subset of the candidate account groups.

The selection of a matching candidate account group after creation of the evaluation set of candidate group accounts can be carried out in various manners. For example, one or more of the digital component selection techniques/processes discussed with reference to FIG. 1 can be used to select the particular candidate account group that is classified as the matching (e.g., winning) account group for a given account. Note that the processing discussed above can be done for each account identified in the data structure 214 or the data structure 212. As such, the matching account group for each account can be the candidate account group selected from the further processing of the evaluation sets of candidate account groups from all accounts.

After selecting the matching account group, the service apparatus 110 can distribute a digital component 220 using distribution parameters and/or a digital component of the matching account group of one of the accounts. For example, a selection process similar to that described with respect to the selection of the matching account groups from the different accounts can again be performed using the matching account groups from the different accounts to select the matching account that will be used to distribute a digital component 220 to the client device 106. The distribution of the digital component 220 can be performed as a response to the search query 206.

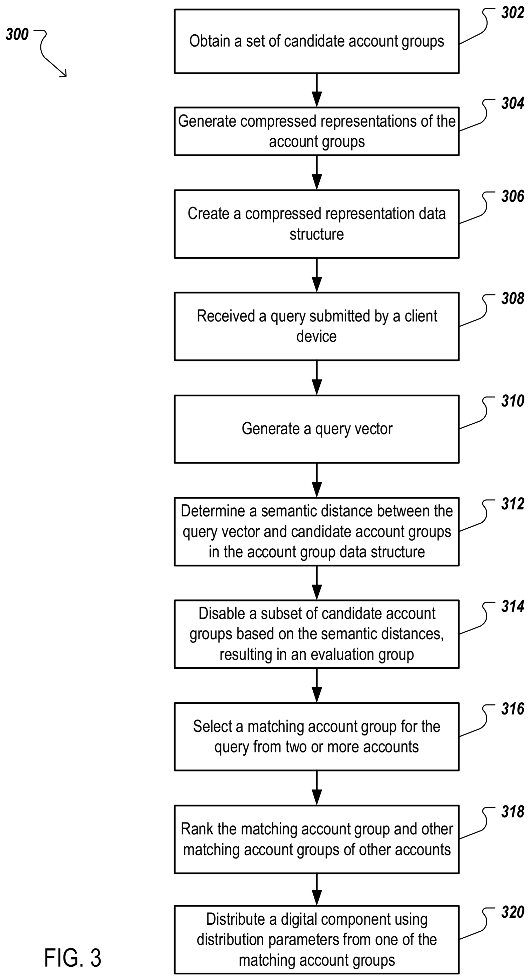

FIG. 3 is a flow chart of an example process 300 for efficient processing of data requests. Operations of the process 300 can be performed by one or more systems that include one or more computing devices. Operations of the process 300 can be implemented as instructions stored on one or more non-transitory computer readable medium, and execution of the instructions can cause specially configured and/or programmed circuitry to perform operations of the process 300.

A set of candidate account groups is obtained (302). In some implementations, the set of candidate account groups includes one or more distribution keywords, one or more web page addresses, and/or one or more digital components. The set of candidate account groups can be obtained, for example, from an account database as previously discussed. Multiple different candidate account groups can be included in a same account together. Candidate account groups from multiple different accounts can be obtained. In some implementations, the candidate account groups can be obtained on an account-by-account basis. For example, the candidate account groups for a particular account can be obtained together at a first point in time, and then the candidate account groups for a different account can be obtained at a second point in time. The candidate account groups can also be obtained in parallel.

As part of obtaining the candidate account groups, a particular candidate account group can be selected and content elements of web pages, including a given web page, can be extracted. For example, the particular candidate account group can include one or more URLs, including a given URL that is the location of the given web page. The system can access the given web page using the given URL (e.g., given web page address), and extract content elements (e.g., text) of the given web page. Content elements can similarly be extracted from other web pages at the locations of other URLs in the particular account group. The extracted content elements can be stored as part of the particular candidate account group, for example, as account group parameters. The extraction of content elements is described with reference to FIG. 2. As such, the description is not repeated here.

As part of obtaining the candidate account groups, a particular candidate account group can be selected and features of digital components, including a given digital component, can be extracted. For example, the particular candidate account group (also referred to as a particular account group) can include one or more digital components that have been uploaded by a content distributor and/or generated by the system. The system can parse the digital component and extract features (e.g., text descriptions, object descriptions using object recognition or AI models, text headlines, etc.) of the digital component. The extracted features can be stored as part of the particular account group, for example, as account group parameters. The extraction of features of a digital component can be performed in a manner similar to the extraction of content elements from a web page, as previously discussed.

Compressed representations of the candidate account groups are generated (304). In some implementations, a compressed representation is generated for each given candidate account group among a set of multiple candidate account groups. The compressed representation for each given (e.g., individual) candidate account group among the set of multiple candidate account groups is a vector representing attributes of the given candidate account group. In some implementations, compressed representations can be generated using an AI system. For example, the system can input attributes of each candidate account group into the AI system and obtain the resulting compressed representation from the AI system, as discussed with reference to FIG. 2.

The candidate account group attributes used to generate the compressed representations can include any of the candidate group attributes previously discussed. When the system extracts content elements from web pages (e.g., a given web page) at URLs (e.g., a given web page) specified in a particular candidate account group, the compressed representation (e.g., a particular compressed representation) can be generated based on the content elements extracted from the web pages (e.g., the given web page). Similarly, when the system extracts features from digital components (e.g., a given digital component) in a particular candidate account group, the compressed representation (e.g., a particular compressed representation) can be generated based on the features extracted from the digital components (e.g., the given digital component). When content elements are extracted from web pages and features are extracted from digital components, the compressed representation can be generated based on the content elements extracted from the web pages and the features extracted from the digital components included in the particular candidate account group.

A compressed representation data structure is created (306). The compressed representation data structure can be created, for example, in a hardware memory device or devices. Each of the different compressed representations 208 can be stored in the compressed representation data structure. For example, a compressed representation data structure can include data records that logically map, associate, link, or index each compressed representation with their corresponding account group identifiers (e.g., the account group identifier corresponding to the account group parameters used to generate the compressed representation). In some implementations, a record that logically associates, links, or indexes each compressed representation with its corresponding account group identifier can also include the account identifier of an account that includes the account group corresponding to the account group identifier. In this way, the relationships between account groups within the same account can be determined.

The operations 302-306 can be performed prior to the receipt of a specific search query. As such, these operations are considered to be performed "offline" because these operations are not being performed to respond to an individual query that has been received from a client device. These operations can be performed on a periodic basis. For example, these operations can be triggered when there is a change to a content distribution account. In this way, the compressed representation data structure can be kept up to date without constantly performing these operations. Each iteration of these operations is considered to be "offline" operations because each iteration is performed independent of the receipt of any search query. In contrast, operations that are performed to respond to a specific received search query are considered to be "online" operations.

After creating the compressed representation data structure, a search query submitted by a client device is received (308), and a query vector is generated (310). The query vector can represent query attributes of the query 206. The query vector 216 can be generated, for example, using the AI system 160 or another embedding model (e.g., a smaller model than that used to generate the compressed representations of the candidate account groups). The query vector can be created in a manner similar to the compressed representation. For example, text of the query can be tokenized, and embeddings can be generated using the tokenized query, e.g., using a machine learning model. The query vector is the output and can take the form of a multi-dimensional vector representing the semantic meaning of the query.

A semantic distance between the query vector and each candidate account group among a plurality of candidate account groups in a given account is determined (312). For example, the system can compute a similarity measure between the compressed representation of the candidate account group (e.g., particular account group) and the query vector representing query attributes of the query. In this example, the determination of the semantic distance is based, at least in part, on the similarity measure between the compressed representation of the particular candidate account group and the query vector representing query attributes of the query. In this way, the relative semantic similarities of each candidate account group to the query can be evaluated. The determination of the semantic distance is discussed in detail with reference to FIG. 2. In some implementations, the system can access an account data structure, and determine the semantic distance for every candidate account group (or a portion thereof) that is associated with (e.g., indexed to) the same account identifier. The system can also repeat these operations for each account.

A subset of candidate account groups is disabled based on the semantic distances, resulting in an evaluation set of candidate account groups for each of two or more accounts (314). In some implementations, fewer than all the candidate account groups from a same account are disabled. For example, among the candidate account groups for a given account, the candidate account group having the closest semantic distance to the query vector will not be discarded, referred to as a closest candidate account group. Additionally, one or more additional candidate account groups from that account will also be retained (e.g., not discarded). The one or more additional candidate account groups that are retained can include, for example, those candidate account groups that are within a specified semantic distance of the closest candidate account group and/or the query vector, as previously discussed with reference to FIG. 2. These operations can be performed for each of one or more different accounts, such that an evaluation group will be created for each of the different accounts.

A matching account group from each of two or more different accounts is selected for the query (316). With respect to a given account, a particular account group can be selected, from the previously created evaluation group, as the matching account group for the query based on the evaluation of distribution parameters of the candidate account groups in the evaluation group. For example, the selection can be performed based on one or more of distribution keywords of the account groups, eligibility values, or other distribution parameters discussed above with reference to FIG. 1.

The distribution parameters can be obtained for each of the candidate account groups in the evaluation group (e.g., evaluation set of candidate account groups). The candidate account groups can be ranked, for example, based on the distribution parameters, and a particular (e.g. highest ranking) candidate account group can be selected as the matching account group. In some implementations, the selection of the matching account group can be performed in a similar manner as the selection of a digital component as discussed with reference to FIG. 1.

For example, an account group with a higher eligibility value (e.g., estimated selection rate/click rate) may be ranked higher than an account group with a lower eligibility value, such that the higher-ranking candidate account group would be selected as the matching account group. The eligibility value can be determined, for example, based on a product of a value specified in the account for distribution of a digital component using the account group and a predicted interaction rate for a digital component distributed using the account group. The candidate account groups from the evaluation group for a particular account can be compared based on their respective eligibility values and/or other distribution criteria, and the highest scoring candidate account group can be selected as the matching account group for that account. This selection of a matching account group can be performed for multiple different accounts.

The matching account group is ranked among other matching account groups of other accounts (318). The ranking can be performed in the same (or a similar) manner as the selection of the matching account group for each of the accounts.

A digital component is distributed using distribution parameters from one of the matching account groups (320). The digital component can be distributed in a manner similar to that discussed with reference to FIG. 1.

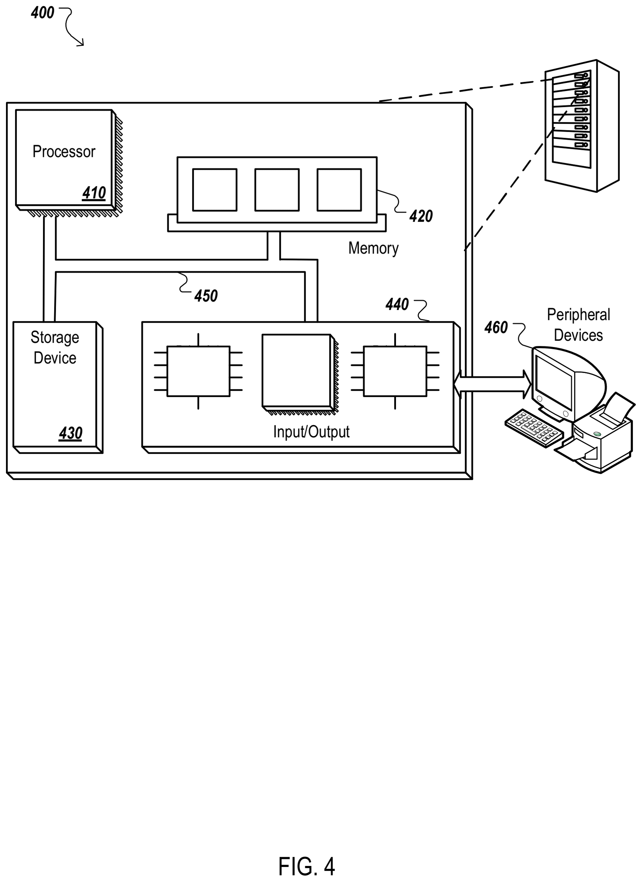

FIG. 4 is a block diagram of an example computer system 400 that can be used to perform some, or all operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface device, e.g., an Ethernet card, a serial communication device, e.g., and RS-232 port, and/or a wireless interface device, e.g., and 802.11 card. In another implementation, the input/output device can include driver devices configured to receive input data and send output data to other peripheral devices, e.g., keyboard, printer and display devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

As used throughout this specification, the phrase "digital component" refers to a discrete unit of digital content or digital information (e.g., a video clip, audio clip, multimedia clip, gaming content, image, text, combination of image and text, bullet point, artificial intelligence output, language model output, or another unit of content or unit of combined content). A digital component can electronically be stored in a physical memory device as a single file or in a collection of files, and digital components can take the form of video files, audio files, multimedia files, image files, or text files and include advertising information, such that an advertisement is a type of digital component.

For situations in which the systems discussed here collect and/or use personal information about users, the users may be provided with an opportunity to enable/disable or control programs or features that may collect and/or use personal information (e.g., information about a user's social network, social actions or activities, a user's preferences or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
obtaining, by a service system including one or more hardware processors, a set of candidate account groups that each include one or more distribution keywords, one or more web page addresses, and one or more digital components;
generating, by the service system, a compressed representation of each candidate account group among the set of candidate account groups, wherein the compressed representation for each individual candidate account group among the set of candidate account groups is a vector representing attributes of the candidate account group;
creating, by the service system and in hardware memory, a compressed representation data structure that maps the compressed representation of each account group to a corresponding account group identifier and an account identifier of an account containing the candidate account group identified by the corresponding account group identifier;
after creating the compressed representation data structure:
receiving, by the service system, a query submitted by a client device;
generating, by the service system, a query vector representing query attributes of the query;
determining, by the service system and for a given account in the compressed representation data structure, a semantic distance between the query vector and each candidate account group among a plurality of candidate account groups in the given account;
disabling, by the service system and for the given account, fewer than all of the candidate account groups based on the semantic distance determination, resulting in an evaluation set of candidate account groups;
selecting, by the system and as a matching account group for the given account, a particular candidate account group from the evaluation set of candidate account groups; and
distributing a digital component of the particular account group using distribution parameters of the particular account group based on the selection of the particular account group as the matching account group.

2. The method of claim 1, wherein selecting the particular candidate account group comprises:
obtaining distribution parameters for the evaluation set of candidate account groups;
ranking the candidate account groups in the evaluation set of candidate account groups based on the distribution parameters; and
selecting the particular candidate account group as the matching account group for the given account.

3. The method of claim 2, further comprising:
after selecting the particular candidate account group ranking the matching account group for the given account relative to other account groups for other accounts.

4. The method of claim 1, wherein obtaining the set of candidate account groups comprises obtaining the particular candidate account group, the method further comprising:
extracting content elements from a given web page located at a given web page address among the one or more web page addresses of the particular candidate account group.

5. The method of claim 4, wherein generating the compressed representation comprises generating a particular compressed representation of the particular candidate account group based on the content elements extracted from the given web page.

6. The method of claim 5, further comprising:
extracting features of digital components included in the particular candidate account group, wherein generating the particular compressed representation of the particular candidate account group comprises generating the particular compressed representation based on the content elements extracted from the given web page and the features extracted from the digital components included in the particular candidate account group.

7. The method of claim 6, further comprising:
after receiving the query submitted by the client device, computing a similarity measure between the compressed representation of the particular account group and the query vector representing query attributes of the query, wherein determining the sematic distance is based on at least the similarity measure between the compressed representation of the particular account group and the query vector representing query attributes of the query.

8. A non-transitory computer readable medium storing instructions that, upon execution by one or more data processing apparatus of a service system, cause the one or more data processing apparatus to perform operations comprising a method according to any preceding claim.

9. A system, comprising:
one or more memory devices; and
one or more data processing apparatus, including processing circuitry, configured to access the one or more memory devices and execute instructions that cause the one or more data processing apparatus to perform operations comprising a method according to any one of claims 1 to 7.
